Europäisches Patentamt

European Patent Office

Office européen des brevets

(19)

(11) **EP 0 673 600 B1**

(12) **EUROPÄISCHE PATENTSCHRIFT**

(45) Veröffentlichungstag und Bekanntmachung des Hinweises auf die Patenterteilung:
**01.10.1997 Patentblatt 1997/40**

(51) Int. Cl.⁶: **A01K 29/00**, A01K 5/02

(21) Anmeldenummer: **95200731.8**

(22) Anmeldetag: **23.03.1995**

(54) **Verfahren und Vorrichtung zur dosierten automatischen Abgabe von Futter an Tiere**

Method and device for automatic metered dispensing of feed to animals

Procédé et installation pour la distribution automatique et dosée d'aliments aux animaux

(84) Benannte Vertragsstaaten:
**BE DE NL**

(30) Priorität: **23.03.1994 NL 9400465**

(43) Veröffentlichungstag der Anmeldung:
**27.09.1995 Patentblatt 1995/39**

(73) Patentinhaber: **AGMAT B.V.**
**NL-5469 EM Erp (NL)**

(72) Erfinder: **van Kaathoven, Hendricus Theodorus**
**NL-5469 NX Boerdonk (Veghel) (NL)**

(74) Vertreter: **Smulders, Theodorus A.H.J., Ir. et al**
**Vereenigde Octrooibureaux**
**Nieuwe Parklaan 97**
**2587 BN 's-Gravenhage (NL)**

(56) Entgegenhaltungen:
**WO-A-82/03159**       **WO-A-91/03930**
**DE-A- 3 623 816**     **NL-A- 7 509 922**
**US-A- 4 493 290**     **US-A- 4 517 923**

• **LANDTECHNIK, Bd. 45, Nr. 11, November 1990 LEHRTE (DE), Seiten 411-412, XP 000165910 ENGELHARDT 'Automatisierte Gewichtserfassung von Rindern 165910'**

EP 0 673 600 B1

## Beschreibung

Die Erfindung betrifft ein Verfahren und eine Vorrichtung zur dosierten automatischen Abgabe von Futter an Tiere, inbesondere Schweine, nach dem Oberbegriff des Anspruchs 1. Ein derartiges Verfahren ist aus der amerikanischen Patentschrift 4.517.923 bekannt.

Bei der automatischen Fütterung von Tieren, insbesondere Vieh, mehr insbesondere Schweinen, wird zwischen Breifütterung und Trockenfütterung unterschieden.

Bei Breifütterung wird eine vorherbestimmte Futtermenge in mehr oder weniger flüssiger Form in einen Futtertrog einer verhältnismäßig großen Länge eingebracht. Dabei fließt das Futter über die ganze Länge des Troges aus bis zu einer überall gleichen Höhe. Diese Methode eignet sich insbesondere dazu, eine große Anzahl Tiere zugleich zu füttern, wobei die Anzahl der Tiere, die zugleich aus dem Futtertrog fressen kann, durch die Länge dieses Troges bestimmt wird. In der Praxis sorgt man dafür, daß die Tiere, die zusammen aus einem einzigen Trog fressen, von etwa gleichem Alter und Gewicht sind, so daß angenommen werden darf, daß alle Tiere einen gleichen Teil der in den Futtertrog eingebrachten Futtermenge erhalten.

Bei Trockenfütterung wird das Futter in trockener Form, in der Regel Körnerform, in den Futtertrog eingebracht. Wegen des trockenen Charakters des Futters wird dieses nicht gleichmäßig über den Boden des Troges ausfließen, so daß zur Abgabe von Futter an eine Vielzahl von Tieren in einem Futtertrog einer verhältnismäßig großen Länge zusätzliche Mittel erforderlich sind, um das Futter gleichmäßig über die Länge des Troges zu verteilen, z.B. eine Vielzahl von Ausströmöffnungen. In der Praxis wird diese Methode der automatischen Futterabgabe daher nur in Kombination mit einem Futtertrog einer verhältnismäßig geringen Länge angewendet, wobei jeder Trog sich für ein oder einige Tiere eignet.

Herkömmlicherweise wird zu vorherbestimmten Zeitpunkten, z.B. dreimal pro Tag, eine vorherbestimmte Menge Futter einer vorherbestimmten Zusammensetzung in den Futtertrog eingebracht, wobei diese vorherbestimmte Menge von der Zeit, d.h. dem Alter der zu fütternden Tiere, abhängig ist. Diese vorherbestimmte Menge, geteilt durch die Anzahl der zu fütternden Tiere, wird im folgenden als "Portion" bezeichnet. Der Verlauf einer Portion mit der Zeit wird als "Futterkurve" bezeichnet. Herkömmlicherweise wird eine Futterkurve als eine gegebene Größe betrachtet, die kennzeichnend für eine bestimmte Tierart ist. Zwar ist bei den herkömmlichen automatischen Futtersystemen eine Futterkurve frei einstellbar (programmierbar), aber dafür ist es dann immer notwendig, daß Bedienungspersonal eingreift. Eine derartige Programmierung wird gegebenenfalls beim Eingeben der Daten eines neuen Tieres stattfinden, aber eine einmal eingegebene, zu einem bestimmten Tier gehörende Futterkurve wird während der Lebensdauer dieses Tieres nicht geändert werden.

Herkömmlicherweise hat die Futterkurve eine Kennlinie, die mit einer fließenden Linie vergleichbar ist, wobei die tägliche Futterabgabe langsam mit dem Alter eines Tieres in Beziehung zu der genetisch bestimmten Wachstumsleistung dieses Tieres zunimmt. Dies basiert auf dem Gedanken, daß das Futterbedürfnis proportional dem Körpergewicht und der Wachstumsgeschwindigkeit (Umfang der Gewichtszunahme) ist.

Es hat sich jedoch gezeigt, daß in der Praxis die Wachstumsgeschwindigkeit der Tiere bestimmt nicht immer gemäß einer fließenden Linie als Funktion des Alters verläuft, sondern unerwartete Sprünge aufweisen kann, wobei Perioden normalen Wachstums mit Perioden verminderten Wachstums abwechseln. Die Momente, in denen derartige abweichende Perioden auftreten, und deren Dauer lassen sich nicht voraussagen. Die herkömmlichen automatischen Futtermethoden haben daher den Nachteil, daß die Futterabgabe dem Futterbedürfnis des betreffenden Tieres nicht auf richtige Weise angepaßt ist, weil die Futterabgabe auf das Futterbedürfnis der normalen Wachstumsperioden abgestimmt ist. Dies impliziert, daß während einer Periode verhältnismäßig geringen Wachstums (niedriges Futterbedürfnis) eine Verschwendung von Futter und eine Überproduktion von Mist stattfinden. Eine Verschwendung von Futter ist schon ein wirtschaftlicher Nachteil; eine Überproduktion von Mist bedeutet nicht nur ein Umweltproblem, sondern auch, da die heutige Gesetzgebung auf das Zurückdrängen der Mistproduktion gerichtet ist und Überproduktion mit Geldsanktionen verbindet, einen wirtschaftlichen Nachteil.

Die Erfindung bezweckt, die genannten Nachteile zu beseitigen und ein Verfahren und eine Vorrichtung zur dosierten automatischen Abgabe von Futter zu schaffen, mit denen eine wirksamere Futterbenutzung möglich ist.

Mehr insbesondere bezweckt die Erfindung, diese Ziele mit möglichst geringem Kostenaufwand zu erreichen.

Es hat sich gezeigt, daß das Tier eine Änderung des Futterbedürfnisses durch eine entsprechende Änderung seiner Freßgeschwindigkeit erkennen läßt, und zwar derart, daß die Freßgeschwindigkeit bzw. der darauf bezogene Parameter Freßzeit sich als zuverlässige und geeignete Parameter für die Anzeige des momentanen Futterbedürfnisses dieses Tieres erwiesen haben.

Auf Basis dieser Erkenntnis gemäß der Erfindung wird daher die Größe einer Futterabgabe nach dem Kennzeichenteil des Anspruchs 1 bestimmt.

Der Vollständigkeit halber wird bemerkt, daß in der niederländischen Patentanmeldung 75.09922 ein System zum Füttern einer Gruppe von Tieren beschrieben wird, wobei das Problem auftritt, daß die am schnellsten fressenden Tiere das Futter der langsamer fressenden Tiere stehlen. Diese Patentanmeldung beschreibt für dieses Problem eine Lösung, die auf dem Füttern aller Tiere der Gruppe mittels getrennter Tröge für jedes Einzeltier in der Gruppe basiert, wobei man das Futter den getrennten Trögen zuführt mit einer Menge pro Zeiteinheit, die auf der Freßgeschwindigkeit des am langsamsten fressenden Tieres basiert.

Nähere Aspekte, Merkmale und Vorteile der Erfindung werden nachfolgend durch eine Beschreibung einer Vorzugsausführungsform einer anpassungsfähigen Futterabgabevorrichtung gemäß der Erfindung verdeutlicht werden unter Hinweis auf die Zeichnung, in der:

Fig. 1 ein Schema einer anpassungsfähigen Futterabgabevorrichtung gemäß der Erfindung zeigt;
Fig. 2A ein Beispiel einer Futterkurve zeigt;
Fig. 2B das Wachstum eines Schweines erläutert;
Fig. 3 die Wachstumsgeschwindigkeit eines Schweines erläutert;
Fig. 4 die Freßzeit von durch die herkömmliche Futterkurve bestimmten Portionen erläutert; und
Fig. 5 den Effekt der Erfindung erläutert.

Als Beispiel wird die Erfindung nachfolgend in bezug auf die Trockenfütterung von Schweinen besprochen werden; ausdrücklich wird jedoch bemerkt, daß die Erfindung nicht auf Anwendungen bei Schweinen beschränkt ist und auch bei Breifütterung angewendet werden kann.

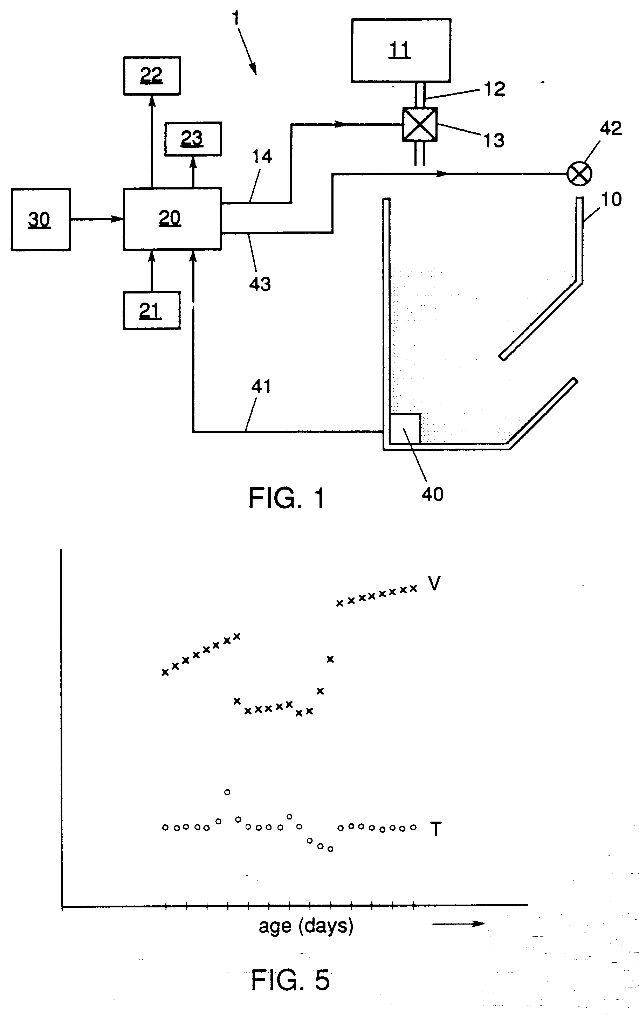

Fig. 1 zeigt schematisch eine anpassungsfähige Futterabgabevorrichtung 1, versehen mit einem Futtertrog 10, einem Vorratsbehälter 11 für das Futter, einer Förderleitung 12 zum Befördern von Futter aus dem Vorratsbehälter 11 zu dem Futtertrog 10 und einer in der Förderleitung 12 angeordneten Dosierklappe 13, die über eine Dosiersteuerleitung 14 von einer Steuervorrichtung 20, z.B. einem Computer, gesteuert werden kann.

Der Futtertrog 10 ist zum Füttern einer Gruppe von Schweinen bestimmt, die alle gleichaltrig sind und im Prinzip untereinander gleiche Futterbedürfnisse haben werden. Die Anzahl der Schweine (A) in dieser Gruppe ist vorbekannt und im Prinzip konstant. Typisch kann diese Anzahl A gleich 10 sein. Die Schweine können nicht alle zugleich aus dem Futtertrog 10 fressen. Ein Schwein wird zu dem Futtertrog gehen, wenn er "Appetit" bekommt, und dort wird er eine kurze Zeit fressen (ca. 5 Min.), worauf er den Futtertrog verläßt, um trinken zu gehen. Gleiches gilt für die übrigen Schweine in der Gruppe, bis der Trog leer ist, was z.B. etwa 8 Stunden dauern kann.

Die Steuervorrichtung 20 ist eingerichtet, zu vorherbestimmten Zeitpunkten, z.B. dreimal pro Tag, durch passende Steuerung der Dosierklappe 13 eine Portion Futter in den Futtertrog einzuführen. Da die Art und Konstruktion der Dosierklappe 13 keinen Gegenstand der vorliegenden Erfindung bilden und Kenntnisse davon zum richtigen Verstehen der vorliegenden Erfindung für den Fachmann nicht notwendig sind, werden diese hier nicht näher beschrieben werden. Gleiches gilt für die Art und Weise, wie die Dosierklappe 13 von der Steuervorrichtung 20 gesteuert werden kann. Es genügt, zu bemerken, daß dazu eine an sich bekannte Dosierklappe und eine an sich bekannte Steuermethode benutzt werden können.

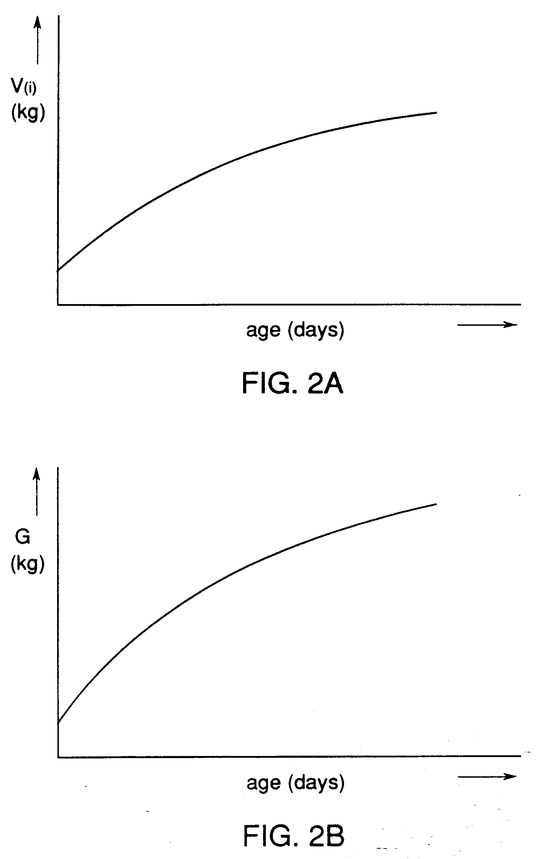

Die Größe V(i) der in den Futtertrog 10 einzuführenden i-ten Portion Futter, ausgedrückt in Gewichtseinheiten, ist im allgemeinen von der Anzahl A und dem Alter der Schweine abhängig, und deren Verlauf mit diesem Alter wird als Futterkurve bezeichnet. Eine derartige Futterkurve ist in einem Speicher 30 der Steuervorrichtung 20 gespeichert, z.B. in Form einer Formel oder einer Tabelle als Funktion der Zeit. Figur 2A zeigt ein Beispiel einer herkömmlichen Futterkurve für eine bestimmte Art Schwein. Die Futterkurve ist als optimale Menge bei einer bestimmten Gruppe von Versuchstieren mit entsprechenden Eigenschaften auf dem Versuchswege bestimmt worden und wird als kennzeichnend für diese spezifische Gruppe betrachtet und als anwendbar bei der Futterabgabe an Einzeltiere, deren Eigenschaften denen dieser spezifischen Gruppe entsprechen.

Figur 2B zeigt den Verlauf des Gewichtes G der genannten Art Schwein als Funktion der Zeit. In großen Zügen läßt sich sagen, daß die Größe einer Futterportion proportional dem Gewicht des Tieres ist.

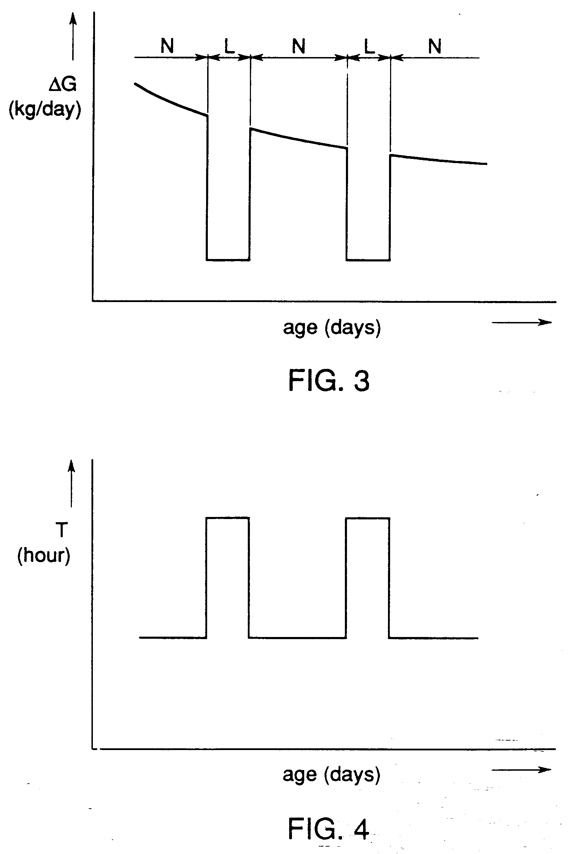

Figur 3 zeigt mehr im einzelnen den Verlauf der Wachstumsgeschwindigkeit $\Delta G$ (Gewichtszunahme pro Tag) einer bestimmten Art Schwein. Die dargestellte Kurve ist durch tägliche Feststel-lung des Gewichtes eines für diese Art repräsentativen Versuchstieres erhalten worden. Deutlich geht aus Figur 3 hervor, daß das betreffende Tier Perioden normalen Wachstums kennt, bezeichnet mit dem Buchstaben "N", abgewechselt mit verhältnismäßig kurzen Perioden verminderten Wachstums, bezeichnet mit dem Buchstaben "L".

Figur 4 zeigt, für dieselbe Periode und für eine Gruppe derselben Versuchstiere, die Freßzeit T(i) einer Portion V(i), wie bestimmt durch die herkömmliche Futterkurve. Hierbei wird mit Freßzeit die Zeit gemeint, die die Gruppe braucht, um die Futterportion aufzufressen. Deutlich geht aus Figur 4 hervor, daß die Freßzeit $T_N$ während der Perioden normalen Wachstums nahezu konstant ist und daß die Freßzeit $T_L$ während der Perioden verminderten Wachstums erheblich länger ist; in der Praxis kann $T_L$ zweimal so groß sein wie $T_N$. Figur 4 erläutert daher, daß die Freßzeit ein geeigneter Parameter ist, das Futterbedürfnis zu bestimmen. Genauso ist die daraus abzuleitende Freßgeschwindigkeit V/T ein geeigneter Parameter, das Futterbedürfnis zu bestimmen.

Wie in Figur 1 erläutert, ist die anpassungsfähige Futterabgabevorrichtung 1 gemäß der Erfindung mit Mitteln versehen, die Größe V(i) der Futterportionen dem Futterbedürfnis anzupassen. Dazu ist, in der dargestellten Ausführungsform, in dem Futtertrog 10 ein Futterdetektor 40 angeordnet, der über eine Signalleitung 41 mit der Steuervorrichtung 20 verbunden ist. Der Futterdetektor 40 gibt über diese Signalleitung 41 an die Steuervorrichtung 20 ein Signal ab, das den Zeitpunkt anzeigt, zu dem das Futter in dem Futtertrog 10 aufgefressen ist, wenigstens anzeigt, daß der Futtertrog 10 so gut wie leer ist. Beispiele von Detektoren, die geeignet sind, als Futterdetektor zu dienen, sind: ein Gewichtsdetektor, der das Gewicht des am Boden des Futtertroges 10 liegenden Futters ermittelt; ein optischer Detektor, der die Anwesenheit von Materie zwischen einer Lichtquelle und einem Lichtsensor ermittelt. Ersteres Beispiel hat den Nebenvorteil, daß die Steuervorrichtung 20 ein Signal empfängt, das stets die in dem Futtertrog 10 vorhandene Futtermenge anzeigt, so daß die Freßgeschwindigkeit für beliebig kurze Zeitperioden bestimmt werden kann, z.B. pro Viertelstunde, woraus zusätzliche Information über das Futterbedürfnis des Tieres erhalten werden kann.

Die Steuervorrichtung 20 ist eingerichtet, die Freßzeit T(i) auszurechnen auf Basis eines ersten Zeitpunktes T1, zu dem die Steuervorrichtung 20 die Dosierklappe 13 aufsteuert, um Futter in den Futtertrog 10 einzubringen, und eines zweiten Zeitpunktes T2, zu dem die Steuervorrichtung 20 des Detektors 40 das Signal empfängt, das den Futtertrog 10 (nahezu) leer ist. Die Steuervorrichtung 20 kann dazu zu den genannten Zeitpunkten eine Systemuhr lesen und die verstrichene Zeit T(i) berechnen, indem sie die gelesenen Zeitpunkte voneinander abzieht. Die Steuervorrichtung 20 kann auch zum Zeitpunkt T1 einen Zeitgeber starten, diesen Zeitgeber zum Zeitpunkt T2 stoppen und die verstrichene Zeit T(i) direkt vom Zeitgeber ablesen. Es wird dem Fachmann klar sein, daß die von der Steuervorrichtung 20 berechnete Freßzeit T(i) in Zeiteinheiten wie Sekunden oder Minuten ausgedrückt sein kann, aber daß es auch möglich ist, daß diese Zeit in Systemeinheiten wie "Anzahl gezählter Impulse einer Systemuhr" ausgedrückt ist.

Die Steuervorrichtung 20 ist weiter eingerichtet, die gemessene Freßzeit T(i) mit dem Bezugswert $T_N$ zu vergleichen, d.h. die Freßzeit, die die Gruppe während Perioden N normalen Wachstums braucht, um die mit $V_{ref}$ angedeutete Standardposition gemäß der vorab eingegebenen Futterkurve (siehe Figur 2A) aufzufressen.

Wenn die gemessene Freßzeit T(i) nicht signifikant von der Bezugszeit $T_N$ abweicht, was eine Periode N normalen Wachstums anzeigt, bestimmt die Steuervorrichtung 20 die Größe V(i+1) der nächsten Futterabgabe lauter auf Basis der vorab eingegebenen Futterkurve, d.h. gemäß der nachstehenden Formel (1):

$$V(i+1) = V_{ref}(i+1) \qquad (1)$$

Mit "signifikant" wird in diesem Zusammenhang gemeint, daß in der Praxis $T_N$ innerhalb eines bestimmten Gebietes, z.B. zwischen 10 und 12 Stunden, schwanken kann und daß daher für Schwankungen innerhalb dieses Gebietes nicht korrigiert zu werden braucht. Es wird dem Fachmann klar sein, daß die Größe eines derartigen Gebietes für eine bestimmte Art Schwein in einfacher Weise auf dem Versuchswege festgestellt werden kann. Übrigens ist es natürlich im Rahmen der vorliegenden Erfindung möglich, derartige genannte Schwankungen beim Berechnen der nächsten Futterabgabe durchaus zu berücksichtigen, und es ist sogar möglich, die Vorrichtung 1, ansprechend auf einen vom Benutzer zu erteilenden Steuerbefehl, nach Wahl in einem Betriebsmodus einzustellen, in dem derartige genannte Schwankungen außer Betracht gelassen werden, oder in einem Betriebsmodus, in dem diese nicht außer Betracht gelassen werden.

Auch ist es möglich, den Einfluß der genannten Schwankungen dadurch auszufiltern, daß man die Futterabgabe vom Mittelwert von zwei oder mehreren vorangehenden Freßzeiten abhängen läßt.

In der jetzt besprochenen Vorzugsausführungsform steuert die Steuervorrichtung 20, wenn die gemessene Freßzeit T(i) signifikant größer als die Bezugszeit $T_N$ ist, die Dosierklappe 13 für die nächste Futterabgabe derart, daß die Größe V(i+1) der nächsten Futterabgabe kleiner als $V_{ref}(i+1)$ ist. Beispielsweise kann die Steuervorrichtung 20 eingerichtet sein, dann die Größe V(i+1) der nächsten Futterabgabe als einen festen, vorherbestimmten, verhältnismäßig niedrigen Wert $V_L$ zu wählen oder die Größe V(i+1) auszurechnen gemäß der nachstehenden Formel (2):

$$V(i+1) = F \times V_{ref}(i+1) \qquad (2)$$

wobei F ein fest gewählter Bruchteil ist, z.B. 0,5.

Es wird jedoch bevorzugt, die Futterabgabe derart zu bestimmen, daß die Freßzeit stets im wesentlichen gleich der nominalen Freßzeit oder Bezugszeit $T_N$ ist. Um dies zu bewerkstelligen, kann die Steuervorrichtung 20 gemäß der Erfindung programmiert sein, die Größe V(i+1) der nächsten Futterabgabe auszurechnen gemäß der nachstehenden Formel (3):

$$V(i+1) = \frac{T_N}{T(i)} \times \frac{V(i)}{V_{ref}(i)} \times V_{ref}(i+1) \qquad (3)$$

Wenn die gemessene Freßzeit T(i) signifikant kürzer als die Bezugszeit $T_N$ wird, steuert die Steuervorrichtung 20 die Dosierklappe 13 für die nächste Futterabgabe derart, daß die Größe V(i+1) der nächsten Futterabgabe größer als die Größe V(i) der vorigen Futterabgabe ist Dabei kann die Steuervorrichtung 20 noch immer die vorstehende Formel (3) benutzen, aber es ist auch möglich, daß die Steuervorrichtung 20 V(i+1) dann direkt $V_{ref}(i+1)$ angleicht.

Wenn die Steuerung der Futterabgabe stets auf Basis der Formel (3) durchgeführt wird, ist es möglich, daß die Größe V(i+1) einer Futterabgabe größer wird als der gemäß der Futterkurve bestimmte Wert $V_{ref}(i+1)$. Falls erwünscht, ist es möglich, eine obere Grenze für die Futterabgabe in die Steuervorrichtung 20 einzugeben, z.B. in Form eines Faktors M, der die obere Grenze $V_{MAX}(i+1)$ auf den gemäß der Futterkurve bestimmten Wert $V_{ref}(i+1)$ bezieht, gemäß der nachstehenden Formel (4):

$$V_{MAX}(i+1) = M \times V_{ref}(i+1) \qquad (4)$$

Gegebenenfalls kann M gleich 1 gewählt werden, was äquivalent zu $V_{ref}(i+1)$ ist, welcher Wert als obere Grenze für die Futterabgabe zu betrachten ist.

Zur visuellen Überwachung der Wirkung des Futterdetektors 40 einerseits und der Futtermenge in dem Futtertrog 10 andererseits kann nahe dem Futtertrog 10 ein Anzeiger 42 vorgesehen sein, z.B. eine Lampe, die von dem Futterdetektor 40 direkt oder von der Steuervorrichtung 20 gesteuert werden kann, wie in Figur 1 mit einer Anzeigerleitung 43 bezeichnet ist.

Es wird bemerkt, daß im allgemeinen die Steuervorrichtung 20 zum Steuern der Futterabgabe an mehrere Futtertröge 10 benutzt werden wird, wobei die Steuervorrichtung 20 und eine mit dieser gekuppelte Dateneingabeeinheit wie ein Tastenfeld 21, sowie eine mit der Steuervorrichtung 20 gekuppelte Dateneingabeeinheit wie ein Bildschirm 22 und/oder ein Printer 23 an einer zentralen Stelle angeordnet sind, um Bedienungspersonal in einfacher Weise eine rasche Übersicht über die momentane Situation vermitteln zu können. Dabei kann die Steuervorrichtung 20 eingerichtet sein, ansprechend auf einen dazu bestimmten Befehl, in bezug auf einen bestimmten Futtertrog 10 eine historische Übersicht über die Zeitpunkte des Füllens, die eingebrachten Mengen, die Zeitpunkte von "Futtertrog leer", die gemessenen Freßzeiten usw. auf dem Bildschirm 22 wiederzugeben und/oder mittels des Printers 23 abzudrucken.

Figur 5 zeigt eine graphische Darstellung eines Teiles einer derartigen historischen Übersicht, wobei die Kurve V die abgegebene Futtermenge und die Kurve T die gemessene Freßzeit repräsentiert.

Es wird bemerkt, daß ein vermindertes Futterbedürfnis auch durch eine Krankheit eines oder mehrerer der betreffenden Tiere verursacht werden kann. Ein Nebenvorteil der Erfindung ist daher, daß es möglich ist, in einem frühen Stadium einen Hinweis zu erlangen, daß ein Tier krank ist oder wird, sogar wenn sich äußerlich am Tier nichts merken läßt. Ein derartiger Hinweis kann vom Bedienungspersonal der genannten historischen Übersicht der gemessenen Freßzeiten und/oder der abgegebenen Futtermengen entnommen werden. Ungeachtet der Ursache eines verminderten Futterbedürfnisses wird jedoch stets gemäß der Erfindung der Vorteil erreicht werden, daß das Futter so optimal wie möglich benutzt wird und daß die Menge an hergestelltem Mist sich vermindert hat.

Wenn die Futterabgabe an Tiere mit unterschiedlichen Eigenschaften gesteuert werden soll, können in dem Speicher 30 mehrere Futterkurven gespeichert sein, die je kennzeichnend für eine bestimmte Gruppe sind, und kann durch die Eingabe der spezifischen Gruppe, zu der das zu fütternde Tier gehört, die zugehörige Futterkurve gewählt werden. Auf vergleichbare Weise können mehrere Bezugszeiten $T_N$ in dem Speicher 30 gespeichert sein und kann durch die Eingabe der spezifischen Gruppe, zu der das zu fütternde Tier gehört, die zugehörige Bezugszeit gewählt werden.

## Patentansprüche

1. Verfahren zur dosierten automatischen Abgabe von Futter an eine Gruppe von Tieren, wobei den Tieren regelmäßig eine Futterportion erteilt wird, deren Größe dem momentanen Futterbedürfnis angepaßt ist, dadurch gekennzeichnet, daß das momentane Futterbedürfnis der Tiere auf Basis der Freßgeschwindigkeit bzw. der Freßzeit mindestens der direkt vorangehenden Portion derselben Gruppe bestimmt wird.

2. Verfahren nach Anspruch 1, dadurch gekennzeichnet, daß, wenn die gemessene Freßzeit $T(i)$ größer als eine Bezugszeit $T_N$ ist, weniger Futter abgegeben wird als die Menge wie bestimmt gemäß einer vorherbestimmten Beziehung zwischen Portion und Alter.

3. Verfahren nach Anspruch 2, dadurch gekennzeichnet, daß die Größe $V(i+1)$ der nächsten Futterabgabe bestimmt wird gemäß der Formel

$$V(i+1) = \frac{T_N}{T(i)} \times \frac{V(i)}{V_{ref}(i)} \times V_{ref}(i+1)$$

wobei

$V(i)$ die Größe der vorigen Futterabgabe ist;
$V_{ref}(i)$ die Größe der vorigen, gemäß der genannten Beziehung bestimmten Menge ist;
$V_{ref}(i+1)$ die Größe der nächsten, gemäß der Beziehung bestimmten Menge ist;
$T(i)$ die gemessene Freßzeit der vorigen Futterabgabe ist;
$T_N$ die normale Freßzeit für eine gemäß der genannten Beziehung bestimmte Menge ist.

4. Vorrichtung zur dosierten automatischen Abgabe von Futter an Tiere, umfassend:

einen Futtertrog (10);
eine Förderleitung (12) zum Befördern von Futter zu dem Futtertrog (10);
eine in der Förderleitung (12) angeordnete Dosierklappe (13);
und eine Steuervorrichtung (20) zum Steuern der Dosierklappe (13) zur Abgabe von Futterportionen ;
wobei Mittel vorgesehen sind, die Größe V der Futterportionen dem Futterbedürfnis anzupassen;
dadurch gekennzeichnet, daß die Steuervorrichtung (20) eingerichtet ist, die Größe V(i+1) der nächsten Futterabgabe u.a. auf Basis der gemessenen Freßzeit T(i) der vorigen Futterabgabe zu bestimmen.

5. Vorrichtung nach Anspruch 4, dadurch gekennzeichnet, daß in dem Futtertrog (10) ein Futterdetektor (40) angeordnet ist, der über eine Signalleitung (41) mit der Steuervorrichtung (20) verbunden ist.

6. Vorrichtung nach Anspruch 5, dadurch gekennzeichnet, daß die Steuervorrichtung (20) eingerichtet ist, die Freßzeit T auf Basis der von dem Futterdetektor (40) empfangenen Signale auszurechnen.

7. Vorrichtung nach Anspruch 5 oder 6, dadurch gekennzeichnet, daß die Steuervorrichtung (20) eingerichtet ist, die Größe V(i+1) der nächsten Futterabgabe zu bestimmen gemäß der Formel

$$V(i+1) = \frac{T_N}{T(i)} \times \frac{V(i)}{V_{ref}(i)} \times V_{ref}(i+1)$$

wobei

V(i) die Größe der vorigen Futterabgabe ist;
$V_{ref}(i)$ die Größe der vorigen, gemäß der genannten Beziehung bestimmten Menge ist;
$V_{ref}(i+1)$ die Größe der nächsten, gemäß der Beziehung bestimmten Menge ist;
T(i) die gemessene Freßzeit der vorigen Futterabgabe ist;
$T_N$ die normale Freßzeit für eine gemäß der genannten Beziehung bestimmte Menge ist.

**Claims**

1. A method for the automatic metered dispensing of feed to a group of animals, which comprises regularly giving the animals a feed portion, the magnitude of which is adapted to the instantaneous feed requirement, characterized in that the instantaneous feed requirement of the animals is determined on the basis of the eating speed or the eating time of at least the immediately preceding portion of the same group.

2. A method according to claim 1, characterized in that when the measured eating time T(i) exceeds a reference time $T_N$ less feed is dispensed than the amount as determined according to a predetermined relation between portion and age.

3. A method according to claim 2, characterized in that the magnitude V(i+1) of the next feed dispensing is determined according to the formula

$$V(i+1) = \frac{T_N}{T(i)} \times \frac{V(i)}{V_{ref}(i)} \times V_{ref}(i+1)$$

wherein

V(i) is the magnitude of the preceding feed dispensing;
$V_{ref}(i)$ is the magnitude of the preceding amount determined according to the said relation;
$V_{ref}(i+1)$ is the magnitude of the next amount determined according to the relation;
T(i) is the measured eating time of the preceding feed dispensing;
$T_N$ is the normal eating time for an amount determined according to the said relation.

4. A device for the automatic metered dispensing of feed to animals, comprising:

a feeding trough (10);
a conveyer line (12) for conveying feed to the feeding trough (10);
a metering valve (13) fitted in the conveyer line (12);
and a control device (20) for controlling the metering valve (13) for dispensing feed portions;
there being provided means for adapting the magnitude V of the feed portions to the feed requirement;
characterized in that the control device (20) is arranged so as to determine the magnitude V(i+1) of the next feed dispensing, inter alia, on the basis of the measured eating time T(i) of the preceding feed dispensing.

5. A device according to claim 4, characterized in that in the feeding trough (10) there is provided a feed detector (40) which is connected with the control device (20) via a signal line (41).

6. A device according to claim 5, characterized in that the control device (20) is arranged so as to calculate the eating time T on the basis of the signals received from the feed detector (40).

7. A device according to claim 5 or 6, characterized in that the control device (20) is arranged so as to determine the magnitude V(i+1) of the next feed dispensing according to the formula

$$V(i+1) = \frac{T_N}{T(i)} \times \frac{V(i)}{V_{ref}(i)} \times V_{ref}(i+1)$$

wherein

V(i) is the magnitude of the preceding feed dispensing;

$V_{ref}(i)$ is the magnitude of the preceding amount determined according to the said relation;

$V_{ref}(i+1)$ is the magnitude of the next amount determined according to the relation;

T(i) is the measured eating time of the preceding feed dispensing;

$T_N$ is the normal eating time for an amount determined according to the said relation.

**Revendications**

1. Procédé de délivrance automatique dosée de fourrage à un groupe d'animaux, une portion de fourrage étant délivrée régulièrement aux animaux, dont la quantité est adaptée au besoin instantané en fourrage, caractérisé en ce que le besoin instantané en fourrage des animaux est déterminé en fonction de la vitesse ou du temps de consommation au moins à la portion directement précédente de groupe.

2. Procédé selon la revendication 1, caractérisé en ce que, lorsque le temps de consommation mesuré T(i) est supérieur à un temps de référence $T_N$, moins de fourrage est délivré que la quantité déterminée selon une relation prédéterminée entre la portion et l'âge.

3. Procédé selon la revendication 2, caractérisé en ce que la grandeur V(i+1) de la délivrance suivante de fourrage est déterminée selon la formule

$$V(i+1) = \frac{T_N}{T(i)} \times \frac{V(i)}{V_{ref}(i)} \times V_{ref}(i+1)$$

dans laquelle

V(i) est la grandeur de la délivrance précédente de fourrage;

$V_{ref}(i)$ est la grandeur de la quantité précédente déterminée selon la relation précitée;

$V_{ref}(i+1)$ est la grandeur de la quantité suivante, déterminée selon la relation;

T(i) est le temps de consommation mesuré de la délivrance précédente de fourrage;

$T_N$ est le temps de consommation normale pour une quantité déterminée selon la relation précité.

4. Dispositif de délivrance automatique dosée de fourrage à des animaux, comportant :

une auge de fourrage (10);
une canalisation de transport (12) en vue du transport de fourrage à l'auge de fourrage (10);
un clapet de dosage (13) disposé dans la canalisation de transport (12);
et un dispositif de commande (20) en vue de la commande du clapet de dosage (13) en vue de la délivrance de portions de fourrage;
des moyens étant prévus afin d'adapter la grandeur V des portions de fourrage au besoin en fourrage;
caractérisé en ce que le dispositif de commande (20) est agencé afin de déterminer la grandeur V(i+1) de la délivrance suivante de fourrage entre autres en fonction du temps de consommation mesuré T(i) de la délivrance précédente de fourrage.

5. Dispositif selon la revendication 4, caractérisé en ce que, dans l'auge de fourrage (10) est disposé un détecteur de fourrage (40), qui est relié par l'intermédiaire d'une ligne de signalisation (41) au dispositif de commande (20).

6. Dispositif selon la revendication 5, caractérisé en ce que le dispositif de commande (20) est agencé afin de calculer le temps de consommation T en fonction des signaux reçus par le détecteur de fourrage (40).

7. Dispositif selon la revendication 5 ou 6, caractérisé en ce que le dispositif de commande (20) est agencé en vue de déterminer la grandeur V(i+1) de la délivrance suivante de fourrage selon la formule

$$V(i+1) = \frac{T_N}{T(i)} \times \frac{V(i)}{V_{ref}(i)} \times V_{ref}(i+1)$$

dans laquelle

V(i) est la grandeur de la délivrance précédente de fourrage;

$V_{ref}(i)$ est la grandeur de la quantité précédente, déterminée selon la relation ci-dessus;

$V_{ref}(i+1)$ est la grandeur de la quantité suivante déterminée selon la relation;

T(i) est le temps de consommation mesuré de la délivrance précédente de fourrage;

$T_N$ est le temps de consommation normal pour une quantité déterminée selon la relation ci-dessus.

FIG. 1

age (days)

FIG. 5

8

FIG. 2A

FIG. 2B

FIG. 3

FIG. 4